Europäisches Patentamt

European Patent Office

Office européen des brevets

(11) Publication number: **0 073 564**
**B1**

# EUROPEAN PATENT SPECIFICATION

(45) Date of publication of patent specification: **09.10.85**

(51) Int. Cl.⁴: **D 06 N 5/00, E 04 D 11/02**

(21) Application number: **82303773.4**

(22) Date of filing: **19.07.82**

(54) **Method of applying a weatherproof coating over a roof.**

(30) Priority: **30.07.81 US 288268**

(43) Date of publication of application:
**09.03.83 Bulletin 83/10**

(45) Publication of the grant of the patent:
**09.10.85 Bulletin 85/41**

(84) Designated Contracting States:
**BE DE FR GB IT**

(56) References cited:
**BE-A- 878 024**
**FR-A-2 086 719**
**GB-A-2 068 989**
**US-A-4 235 953**

(73) Proprietor: **DOW CORNING CORPORATION**
**Midland Michigan 48640 (US)**

(72) Inventor: **Brady, Sam Allan**
**1300 E. Pine River**
**Midland Michigan 48640 (US)**
Inventor: **Elias, Michael George**
**309 Graham**
**Midland Michigan 48640 (US)**
Inventor: **Freiberg, Alan Lee**
**1606 Mill Street**
**Midland Michigan 48640 (US)**

(74) Representative: **Lewin, John Harvey et al**
**Elkington and Fife High Holborn House 52/54**
**High Holborn**
**London WC1V 6SH (GB)**

Courier Press, Leamington Spa, England.

## Description

This invention relates to a method of providing a water impervious membrane covering for a roof by coating a cloth with silicone elastomeric compositions.

Many systems have been devised for providing a roof covering for buildings. One method uses pieces of water-impervious material, such as slate or wood, layed upon the roof in overlapping rows so that each joint is covered by the piece layed above it. Such shingled roofs are satisfactory when the roof is pitched at a high angle so that there is no tendency for the water to flow back through the cracks between the pieces. Even in these cases, when located in areas where freezing occurs, ice occasionally forms on the lower edges of roofs to form a dam which forces water back through the cracks into the interior of the building.

A method of covering roofs that did not have cracks in them was evolved making use of asphalt as an impregnant and bonding agent along with felts of various fibers. The asphalt in the form of a hot liquid or an emulsion was spread over the roof, then pieces of felt were rolled out over it. Another layer was then applied, moving the location of the seams so that they did not occur in the same area. Such built up roofs eliminated the problem of water backing up from ice dams. Built up roofs could also be used when the roof was of a low pitch or flat as there were no cracks for water to back up through. The built up roofs fail due to cracks developing because of exposure to weathering and embrittlement of the felt, oxidation of the asphalt, and expansion and contraction of the system because of temperature changes. During cold weather, the asphalt becomes brittle and easily cracks due to expansion and contraction forces.

Systems have been developed based upon sheets of rubber or plastic intended to correct the problem of failure due to weathering and cracking from temperature changes. The sheets used have some elasticity so that they can move as the underlying structure expands and contracts over the course of the changing seasons. However, there are still problems remaining. Many of the coatings are satisfactory at normal temperatures, but become overly soft at high temperatures or overly hard at very low temperatures.

Because these are also the times that building movements are at a maximum, failures result. The plastic materials tend to lose volatile components and become brittle with age. The rubber-based materials are not always compatible with the underlying roof structure and special steps must be taken to make sure they do not contact asphaltic materials.

A system has been devised which coats the roof structure with a polyurethane foam which insulates the underlying structure. The polyurethane foam cannot withstand the effects of sunlight, so it is covered with an opaque layer of silicone rubber based paint to provide weatherability to the system. The system requires special equipment and skilled operators for installation, making it expensive and suitable only for large industrial installations.

Repairs on roofs have been made by coating a roof surface with a solvent or emulsion based asphalt, rolling down an impregnated glass fiber mat and overcoating with more of the asphalt, Another system involves the simultaneous spraying of asphalt solvent dispersions or aqueous emulsions with chopped glass reinforcement over a saturated felt to give a reinforced membrane. This system is said to provide a simpler roofing system with comparable life to a conventional asphalt and felt built up roof. Experience has shown that systems based on asphalt do not have a satisfactory life without regular maintenance.

Summary of the Invention

A method of applying a weatherproof covering over a roof is described. The method comprises laying a piece or pieces of clotch over the roof, then bonding the pieces of cloth together at any seams. The cloth is adhered to the roof surface, at least at all outer edges and at any projections. The cloth, which is now a single piece, is then coated with a liquid, elastomeric silicone composition, the composition being curable under atmospheric conditions. The composition is applied in sufficient amount so that the coated cloth forms a water impermeable membrane when the composition cures.

It is an object of this invention to provide a water impermeable membrane covering a roof, the membrane being bonded to the roof at all edges and projections.

It is an object of this invention to provide a water impermeable membrane covering a roof that is elastic at both high and low temperatures so that the roof covering does not crack due to building movement.

It is an object of this invention to provide a water impermeable membrane covering a roof that has a maximum resistance to the effects of weathering.

Brief Description of the Drawings

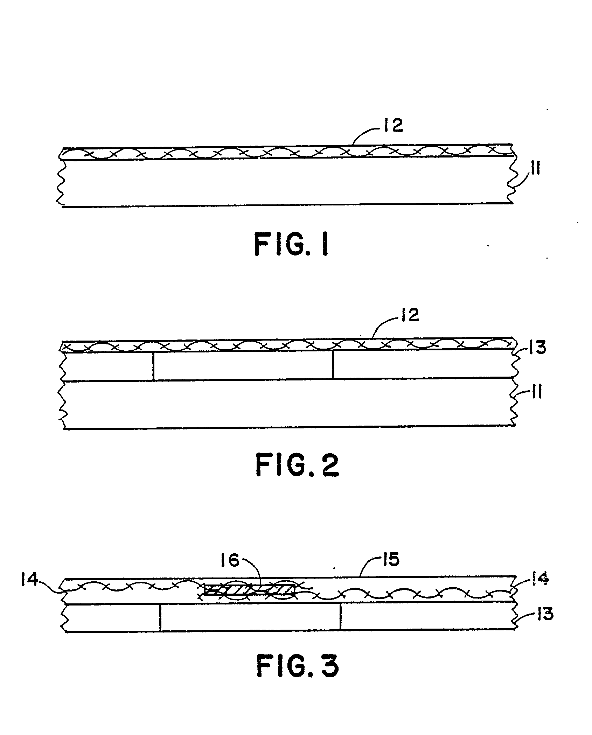

FIG. 1 depicts a roof covered with a membrane of cloth impregnated with silicone elastomer. FIG. 2 depicts an insultated roof. FIG. 3 depicts a seam in the cloth used in the membrane.

Description of the Invention

This invention relates to a method of applying a weatherproof covering over a roof comprising (A) laying a piece or pieces of cloth over the roof, then (B) bonding the pieces of cloth together at any seams, (C) adhering the cloth to the roof surface, at least at all edges and projections, then (D) coating the cloth with a liquid, elastomeric silicone composition in sufficient amount so that the coated cloth forms a water impermeable membrane when cured, the composition being curable under atmospheric conditions.

The method of this invention is designed to be an uncomplicated method, using a variety of silicone elastomeric compositions and cloth reinforcements that can be easily applied to any size roof by unskilled labor. Since only readily available equipment is required for the installation, the cost is at a minimum. The finished roof membrane is bonded to the underlying structure at all edges and projections so that no water can get under the membrane. The membrane is a silicone elastomer reinforced with cloth. The membrane is elastic at both high and low temperatures so that it does not crack due to building movements. The silicone elastomer has excellent resistance to weathering effects so that the membrane has a long, useful life. If moisture gets under the membrane, such as from a faulty moisture barrier under the roof insulation, the moisture can escape without the use of expensive roof vents. Water vapor can escape through the silicone elastomer, even though it is impervious to liquid water. Since the reinforced membrane is formed at the site rather than in a factory, there is no cost due to the manufacturing of the membrane.

As a preliminary step in the method of this invention, the roof structure is prepared for the subsequent covering by reinforcing cloth. If a new roof is being constructed, the roof deck 11, as shown in FIG. 1, is completed. The finished deck should be reasonably smooth without sharp protrusions which would tend to puncture the membrane to be later applied. The deck can be any of the surfaces used to construct roofs, such as reinforced concrete; nailable, lightweight concrete; poured gypsum; formed metal; and wood, either as planks or as plywood sheets. The customary construction methods are used for installing expansion joints and providing for projections through the roof for pipes, electrical conduit, vents and chimneys.

In most cases, there are vapor barriers and insulation layers involved in the roof system. In some cases, the insulation and vapor barriers are applied beneath the roof deck as is most common in residential construction. Commercial buildings often have slightly sloping roofs that have the insulation applied on top of the roof deck. Such a construction is shown in FIG. 2 where the insulation 13 is over the roof deck 11. The reinforced silicone membrane 12 covers the insulation. The insulation applied over the roof deck must be relatively rigid as it will be walked on in applying the reinforced silicone membrane. Typical insulation includes mineral or vegetable fiber boards, rigid glass fiber insulation, glass-bead board, rigid urethane board or sprayed coating, foamed polystyrene board, and composite board. The insulation is attached to the roof deck with conventional adhesives or mechanical fasteners.

The first step in the method of this invention is laying a piece or pieces of cloth over the roof or insulation. The cloth acts as a reinforcement for the silicone elastomeric coating to be applied over it. Any type of cloth can be used, but some types are more suitable. It is preferable to use cloth constructed of fibers which do not absorb excessive amounts of water and those which do not deteriorate with age. Because the final membrane functions best when it has elasticity, the reinforcing fibers should be elastic or the cloth construction should allow for stretching. Nonwoven types of cloth are preferable because of their deformability and generally low cost as compared to woven or knitted cloth. Polypropylene and polyester fibers made into nonwoven cloth and spun-bonded cloth are preferred constructions. Cloth thicknesses are proposed varying from about 0.13 mm to 2 mm.

As the cloth is being layed out over the roof, it can be adhered to the roof surface. It is not required that the entire cloth area be bonded to the surface under it. A commercial elastomeric silicone composition such as a caulk can be applied to the roof surface in a random pattern of spots or lines. The cloth is then placed over the caulk and forced down into the caulk. When the caulk cures, the cloth is bonded to the roof surface.

If the cloth is to be bonded to the entire surface of the roof, it is preferred to use a liquid elastomeric silicone composition, such as those described below. The liquid elastomeric silicone composition is applied to the roof surface by appropriate means such as spraying, brushing, or rolling, then the cloth is layed out over the wet composition. When the composition cures, the cloth is bonded to the roof surface.

The cloth can also be bonded to the roof surface by mechanical means such as staples or nails being placed through the cloth into the roof surface.

Normally, the area of a roof is such that more than one piece of cloth will be required in order to cover it. As the pieces of cloth are layed out over the roof, they are overlapped at adjoining edges to form a seam. The amount of overlap is conveniently from about 5 cm to 30 cm. The pieces of cloth are bonded together at the seams, either while being layed out or afterward. The method of bonding the pieces of cloth together at the seam can be selected to best suit the type of fibers used in the cloth. Thermoset or natural fibers can be bonded by sewing or adhesive bonding with adhesives that bond to the fibers used. Thermoplastic fibers can be bonded in the same means and also by heat fusion.

A simple and preferred method of bonding the pieces of cloth together at the overlap is adhesive bonding using a commercial elastomeric silicone composition such as a caulk. Many caulks are available for bonding to a great variety of substrates. A preferred caulk is one selected from the class that cures by exposure to the moisture and gives off an alcohol byproduct. The composition is obtainable in storage tubes which are adapted to fit in standard caulking guns. The seams are bonded by extruding a bead of caulk between the adjoining surfaces of cloth at the seam, then pressing the two pieces of cloth together to force the bonding composition to flow out and into the cloth. Upon cure of the composition, the pieces of cloth are bonded together. The seam can be further sealed and smoothed by applying a fillet of the same composition at the exposed cloth edges at the seam.

Another method of bonding the pieces of cloth together at the overlap is adhesive bonding using an elastomeric silicone composition in the form of a liquid that cures at ambient conditions. The composition can be a two part system that is mixed just before use that then cures without heat, or the composition can be a one part system that cures by evaporation of solvent or by exposure to the atmosphere. Several two part compositions are commercially available as is a solvent containing one part composition. Compositions such as those described in US—A—3,334,067, issued August 1, 1967, to Weyenberg are suitable bonding compositions which patent describes such elastomeric silicone compositions. Another type of suitable composition is described in US—A—3,189,576, issued June 15, 1965, to Sweet which describes an oxime containing elastomeric silicone composition that is a one component room-temperature curing system that cures upon exposure to moisture in the air. Dispersions of such compositions in solvent are commercially available.

A preferred type of liquid elastomeric silicone composition useful as an adhesive is an emulsion, because it can be used without any danger of fire or hazardous fumes, is easily diluted and cleans up with water, and is less costly than solvent dispersions. A preferable silicone emulsion is that disclosed in US—A—4,221,688, issued September 9, 1980, to Johnson, Saam, and Schmidt, which describes silicone elastomeric compositions which cure by removal of the water from the emulsion. The emulsions are applied to the adjoining surfaces of the cloth at the seam, then the surfaces are pressed together and the emulsion allowed to dry and cure, bonding the pieces of cloth together. FIG. 3 illustrates pieces of cloth 14, applied over the insulation 13, and bonded together at a seam by means of adhesive 16.

The cloth is adhered to the roof surface, at least at all edges and projections. The means of adhering the cloth to the roof can be by mechanical means, such as by placing the cloth edge under a metal flashing and then attaching the flashing in the usual manner with mechanical fasteners. The cloth can also be adhered to the roof by adhesive bonding. The adhesive used must bond to both the roof surface and the cloth being used. In addition, it must cure at ambient conditions. A preferred adhesive is an elastomeric silicone composition.

The same elastomeric silicone compositions discussed above for bonding the cloth seams can be used for adhering the cloth to the roof. The cloth can be bonded by use of a commercial elastomeric silicone caulk. The caulk is extruded from its storage tube onto the roof surface at the edge, then the cloth is pressed down over the bead of caulk. When the caulk cures, it bonds the cloth to the roof surface. In some cases, depending upon the nature of the roof surface and the type of caulk being used, it may be necessary to first prime the roof surface before applying the caulk. The caulk manufacturer's instructions will tell on which surfaces a primer is necessary.

A liquid elastomeric silicone composition can be used for adhering the cloth to the roof by applying the composition by spraying, brushing, or rolling onto the roof surface, then pressing the cloth edge into the wet composition. When the composition cures, the cloth edge is adhered to the roof surface. The suitable liquid elastomeric compositions are those discussed above as suitable for bonding the cloth seams.

The cloth is also adhered to projections through the roof surface. Suitable cloth sleeves and flashings are fashioned and bonded to the cloth covering the roof and to the surface of the projections so that an unbroken layer of cloth covers the roof surface and then comes up onto any projections, such as vents, pipes, or parapets. Expansion joints should also be constructed in the usual manner, then have cloth adhered to their vertical surfaces. The edges of the cloth will be subsequently covered with counter flashing in the same manner as is currently used with conventional built-up roof constructions. When this step is completed, a cloth layer covers the entire roof surface and extends up onto any projections, expansion joints, walls, etc. The layer of cloth is bonded at all outer edges to the underlying surface. The bonded outer edge assures that water will not be able to penetrate under the finished membrane.

The layer of cloth is then converted into a single, water impermeable membrane by coating the cloth with a liquid elastomeric silicone composition. Sufficient composition is applied in one or more coats so that an impervious coating 15 is formed upon drying and curing of the composition as in FIG. 3. The composition can be applied to the cloth by any convenient method such as spraying, brushing, rolling or flooding and squeegeeing. The preferred method is spraying. It is preferred that the coating be applied in at least two coats, drying the first coat before applying the second. It is easier to assure that no leaks or pinholes are present in the coating if multiple coats are applied. A more uniform coating results if two coats are applied at right angles to each other.

The liquid elastomeric silicone composition useful for coating the cloth is the same as that discussed above as useful for bonding the cloth edges together. It is not necessary that the same composition be used for steps (B), (C), and (D). For instance, the cloth seams can be bonded by brushing a layer of liquid, solvent dispersed, elastomeric silicone composition on the adjoining cloth surfaces, pressing the cloth together, then allowing the solvent to evaporate and the composition to cure. The edges of the cloth can then be adhered by extruding a caulk type elastomeric silicone composition onto the roof surface and pressing the cloth edges into the caulk. On curing of the caulk, the cloth edges are adhered to the roof. Then the cloth layer can be sprayed with an elastomeric silicone aqueous emulsion to yield a water impervious coating on the cloth. Since the emulsion type liquid elastomeric silicone composition does not give off any flammable or hazardous fumes on drying, the emulsion is preferred for coating the cloth. The preferred emulsion is that described by US—A— 4,221,688, cited above.

The elastomeric silicone emulsion preferred in this invention comprises (a) 100 parts by weight of an anionically stabilized, hydroxyl endblocked polydiorganosiloxane, present as an oil-in-water emulsion, (b) from 1 to 150 parts by weight of colloidal silica, (c) from 0 to 200 parts by weight of filler other than colloidal silica, and (d) from 0.1 to 2.0 parts by weight of alkyl tin salt, said silicone emulsion having a pH of 9 or greater. Such elastomeric silicone emulsions are commercially available.

The hydroxyl endblocked polydiorganosiloxanes useful in the elastomeric silicone emulsion are those which can be emulsified and which will impart elastomeric properties to the product obtained after the removal of water. The best physical properties are obtained when the weight average molecular weight of the polymer is about 50,000. The preferred molecular weights are in the range of 200,000 to 700,000. The most preferred hydroxylated polydiorganosiloxanes are those prepared by the method of anionic emulsion polymerization described by Findlay et al. in US—A—3,294,725, issued December 27, 1966, which shows the methods of polymerization and shows the hydroxyl endblocked polydiorganosiloxane in emulsion. The anionic surfactants used are preferably the salt of the surface active sulfonic acids used in the emulsion polymerization to form the hydroxyl endblocked polydiorganosiloxanes as shown in US—A—3,294,725 cited above which shows the surface active sulfonic acids and salts thereof.

Colloidal silica is a required ingredient in the preferred emulsion. The silicone emulsion does not yield a cured film upon drying if the colloidal silica is not present in the composition. Any of the finely divided colloidal silicas that are capable of being dispersed in the silicone emulsion can be used. Preferred are the colloidal silicas available as colloidal silica dispersions in water. The preferred amount of colloidal silica is from 15 to 50 parts by weight.

An alkyl tin salt, preferably a dialkyltin-dicarboxylate, is used to reduce the storage time between the preparation of the silicone emulsion and the time an elastomeric product can be obtained from the silicone emulsion by removal of the water under ambient conditions to an acceptable range of one to three days. Dialkyl tin salts can be used in amounts of from 0.1 to 2.0 parts by weight for each 100 parts by weight of the hydroxyl endblocked polydiorganosiloxane, preferably about 0.1 to 1.0 parts by weight. Dialkyltincarboxylates which are preferred include dibutyltindiacetate, dibutyltindilaurate, and dioctyltindilaurate.

Another useful ingredient for addition to the silicone emulsion is a filler other than colloidal silica. Such fillers can be added to provide pigmentation which can be used, for example, as a colorant or as an ultraviolet light screening agent. Other fillers can be used as extending fillers which can be used to reduce the cost per unit of the elastomeric product. Examples of fillers other than colloidal silica include carbon blacks, titanium dioxide, clays, aluminum oxide, quartz, calcium carbonate, zinc oxide, mica, and various colorant pigments.

The preferred method of preparing the elastomeric silicone emulsion is to prepare an emulsion polymerized, hydroxyl endblocked polydiorganosiloxane using an anionic surfactant, add the colloidal silica, and then adjust the pH within the range of 10.5 to 11.5 inclusive. The preferred method of adjusting the pH has been found to be with a basic compound such as an organic amine, an alkali metal hydroxide, or a combination thereof. The preferred organic amine is diethylamine. The preferred alkali metal hydroxide is sodium hydroxide. After adjustment of the pH, the alkyl tin salt is added.

Further particulars on the preferred elastomeric emulsion used in the method of this invention are found in US—A—4,221,688 cited above. Preferred elastomeric silicone emulsions have a solids content of from 35 to 70 percent by weight and a viscosity of from about 15 Pa·s to about 50 Pa·s at 25°C. An emulsion with a solids content of 40 percent by weight and a viscosity of 25 Pa·s at 23°C has been found useful for coating a nonwoven polypropylene cloth of about 1.0 mm thickness. The emulsion can be applied in one or more coats to build up the desired coating. An emulsion with a solids content of 67 percent by weight and a viscosity of 60 Pa·s at 23°C has also been found suitable for this fabric. The high viscosity, higher solids emulsion does not penetrate into the fabric as far as does the lower viscosity material. A spun bonded, nonwoven polyester fabric having a thickness of 0.2 mm works well with the 40% solids material discussed above. The emulsion, with a viscosity of 25 Pa·s, is fluid enough to flow down through the fabric to the underside, resulting in the cloth being completely encapsulated by the emulsion. By using an emulsion with a low enough viscosity, in sufficient amount, the cloth can be bonded to the roof surface wherever desired by coating the cloth and allowing the coating to flow down through the cloth to the underlying surface. Subsequent coats of the same emulsion or a different emulsion are then applied to further coat the cloth and form a water impervious membrane over the roof surface.

Additional layers of cloth can be applied in areas subjected to potential damage, such as walkways and around roof-mounted equipment, such as air conditioners or ventilating fans. The area to be reinforced can be coated with elastomeric silicone composition, the additional layer of cloth applied, and the cloth coated with additional elastomeric silicone composition. Upon drying and curing, the additional cloth layer would be bonded to the underlying layer.

The membrane can be finished by adding a layer of sand or roofing granules to the last coat of elastomeric silicone composition while it is still wet. Such a coating provides abrasion resistance, flame resistance, and changes the appearance of the roof surface. The surface is less slippery when wet when the last coat is treated in this manner.

The method of this invention, as described above, produces a weatherproof roof covering manufactured in place. The liquid water impermeable membrane is manufacturing in place using readily available equipment and unskilled labor. The liquid water impermeable membrane is attached to the roof surface at all edges so that no water can get under the membrane. The membrane has no exposed seams which can later develop leaks. All seams in the cloth are formed before the membrane is formed. The elastomeric silicone composition which is used to form the membrane gives the membrane the ability to withstand the effects of the temperature induced expansion and contraction of the roof structure under the membrane.

The following examples are included for illustrative purposes only.

## Example 1

A house roof was covered following the method of this invention. The upper roof surface was expanded polystyrene foam insulation board. Sheets of nonwoven polypropylene cloth of about 1 mm thickness were rolled out to cover the insulation board surface. The sheets were placed first at the lower edge of the roof. Then subsequent sheets were placed overlapping each at the seams about 10 to 20 cm. The overlapping seams were bonded together by heat fusing. An electric hot air blower heated the fibers to their fusing temperatures, then a roller pressed the hot areas together and cooled the fibers, yielding an overlapped seam with the pieces of cloth fused together. The edges of the cloth at the roof perimeter were bonded to a copper drip edge by using a commercially available silicone rubber caulking composition. The caulking composition was extruded from its storage tube onto the copper drip edge, then the overlying cloth was pressed down over the bead of caulking composition. The caulking composition cured by exposure to the moisture in the air into an elastomeric silicone composition which bonded the cloth to the copper drip edge.

As the cloth was rolled out over the roof, the cloth pieces were fitted over and around the projecting vents and chimney. The cloth was bonded to all such projections by use of the same caulking composition used to bond the cloth at the roof perimeter. At this point, the roof covering was a single piece of cloth, bonded to the roof at all edges and projections, the cloth being composed of several individual pieces bonded together at the seams.

The cloth was then coated by spraying with an aqeuous elastomeric silicone emulsion. The emulsion was prepared by first preparing an anionically stabilized emulsion polymerized polydimethylsiloxane containing about 58 percent by weight of hydroxyl endblocked polydimethylsiloxane having a weight average molecular weight of about 325,000. This aqueous emulsion was anionically stabilized with the sodium salt of dodecylbenzenesulfonic acid present in an amount of about one percent based upon the weight of the emulsion.

The elastomeric silicone emulsion was then prepared by first mixing 100 parts by weight of an aqueous sodium stabilized colloidal silica dispersion, having about 15 percent by weight silica, with 2 parts by weight diethylamine. Then 167 parts by weight of the above described emulsion of polydimethylsiloxane was added. Next, 0.3 part by weight of antifoam emulsion and 1 part by weight of a 50 percent by weight emulsion of dioctyltindilaurate were mixed in until uniform. Then 10 parts by weight of an acrylic thickening agent was mixed in until a uniform mixture resulted. The silicone emulsion had a viscosity of about 25 Pa·s at 23°C, a pH of about 11, and a solids content of about 40 percent by weight.

The emulsion was sprayed onto the cloth using a commercial airless spray gun at a rate sufficient to thoroughly coat the surface of the cloth. This coating was allowed to air dry overnight.

A second coat of the emulsion was sprayed over the first coat the next day. While still wet, the surface was coated with water-washed sand by hand broadcasting. Before the emulsion had a chance to dry, a heavy rain storm destroyed the second coat of emulsion. The destroyed coating, sand, and rainwater were then cleaned off the roof and the roof was allowed to dry.

Because of low air temperatures and continuing threat of rain, a liquid elastomeric silicone composition that cured on exposure to the moisture in the air was then used as a top coat on the roof in place of the emulsion that was destroyed by the rainfall. This solvent dispersion was prepared by first mixing 83.2 parts by weight of a hydroxyl endblocked polydimethylsiloxane fluid having a viscosity of about 13.5 Pa·s, 16.8 parts by weight of a hydroxy endblocked polydimethylsiloxane fluid having a viscosity of about 0.8 Pa·s, and 20 parts by weight of naphtha. Then 18 parts by weight of pigment grade titanium dioxide and 100 parts by weight of calcium carbonate were mixed in as fillers. The mixing was carried out in a sealed mixer so that the filler could be well dispersed under high shear conditions without allowing the mixture to become saturated with air and moisture. The dispersion was then finished by the addition of 10 parts by weight of methyltrimethoxysilane and 2 parts by weight of tetraisopropyltitanate. This addition was made in a manner that excluded the mixture from exposure to moisture in the air. The catalyzed mixture was then packaged in moisture proof, sealed pails.

The solvent dispersion was applied to the cloth as a second coat by spreading it over the cloth surface with paint rollers. After the solvent dispersion was uniformly applied over the previously coated cloth, the coating was allowed to dry and then cure by exposure to the moisture in the air. The coated cloth formed a membrane impervious to liquid water, the cloth being bonded at its outer edges to the underlying insulation. Since the cloth seams were first bonded and then the coating was applied, the upper surface of the finished membrane was a continuous coating of elastomeric silicone elastomer with no interruptions or discontinuities in the coating. Water could not penetrate under the membrane at the outer edges or at projections since the cloth was bonded to the underlying surface at all such points. The roof covering is expected to have a long service life since the elastomeric silicone is known to be weather resistant.

Example 2

An industrial roof of concrete was covered using the method of this invention.

The concrete roof deck was first sealed by rolling on a coating of an aqueous liquid elastomeric silicone emulsion which had been previously prepared.

A silicone emulsion was prepared by first mixing 6.3 parts by weight of a sodium stabilized colloidal silca dispersion having 15 percent by weight silica with 0.7 part by weight of diethylamine. Then 63.6 parts by weight of the above emulsion of polydimethylsiloxane of Example 1 was mixed with the silica mixture. Next 0.2 part of silicone antifoam, 0.2 part of propylene glycol, 0.9 part of carbon black pigment, and 0.4 part of a 50 percent by weight dioctyltindilaurate emulsion were mixed until uniform. Then 27.7 parts by weight of kaolin clay filler was mixed into the uniform mixture. The emulsion had a viscosity of 60 Pa·s at 23°C and a solids content of 67 percent by weight. The pH of the emulsion was 11.5.

The roof was then covered with polystyrene foam insulation board held in place with mechanical fasteners. The insulation board was then primed with a commercial primer containing tetrabutyltitanate and normal propylorthosilicate.

The primed insulation board was sprayed with a coating of the silicone elastomeric emulsion of Example 1. While the coating was wet, it was covered with nonwoven polypropylene cloth having a thickness of about 1 mm. When the emulsion dried, the cloth was found to be bonded to the insulation board.

The cloth was then sprayed with a coating of the same emulsion in an amount sufficient to thoroughly wet the surface of the cloth. The emulsion penetrated into the cloth about half way through its thickness. After this first coating dried, a second coat was applied consisting of the first silicone emulsion described above. This coating was then allowed to dry and cure. The method provided a water impervious membrane, bonded to the insulation board, that had no exposed seams, was elastomeric in nature, and had a long life expectancy when exposed to the weather.

**Claims**

1. A method of applying a weatherproof covering over a roof characterized by performing the steps of

(A) laying a piece or pieces of cloth over the roof, then

(B) bonding the pieces of cloth together at any seams,

(C) adhering the cloth to the roof surface, at least at all edges and projections then

(D) coating the cloth with a liquid, elastomeric silicone composition in sufficient amount so that the coated cloth forms a water impermeable membrane when cured, the composition being curable under atmospheric conditions.

2. The method in accordance with claim 1 in which the liquid, elastomeric silicone composition is an aqueous emulsion.

3. The method in accordance with claim 2 in which the aqeuous emulsion comprises

(a) 100 parts by weight of an anionically stabilized, hydroxyl endblocked polydiorganosiloxane, present as an oil-in-water emulsion,

(b) from 1 to 150 parts by weight of colloidal silica,

(c) from 0 to 200 parts by weight of filler other than colloidal silica, and

(d) from 0.1 to 2.0 parts by weight of alkyl tin salt, said emulsion having a pH of 9 or greater.

4. The method in accordance with claim 3 in which the polydiorganosiloxane has an average molecular weight in the range of 200,000 to 700,000; the colloidal silica is present as a sodium stabilized colloidal silica dispersion in an amount of from 15 to 50 parts by weight; there is present a filler other than colloidal silica; the alkyl tin salt is a diorganotindicarboxylate; there is also present an organic amine composed of carbon, hydrogen, and nitrogen atoms, or carbon, hydrogen, nitrogen, and oxygen atoms, said organic amine being soluble in the amount of water present in the emulsion.

5. The method in accordance with claim 2 in which the cloth is a nonwoven spun-bonded polyester cloth.

6. The method in accordance with claim 5 in which the cloth seams are overlapped; bonded together at the overlapping seams with an aqueous elastomeric silicone emulsion; adhered to the roof surface with an elastomeric silicone composition in the form of a caulk; and coating the cloth with an aqeuous elastomeric silicone emulsion having a solids content of from 35 to 70 percent by weight and a viscosity of from 15 Pa·s to 50 Pa·s at 25°C.

7. The method in accordance with claim 6 in which the aqueous elastomeric silicone emulsion comprises

(a) 100 parts by weight of an anionically stabilized, hydroxyl endblocked polydiorganosiloxane, present as an oil-in-water emulsion,

(b) from 1 to 150 parts by weight of colloidal silica,

(c) from 0 to 200 parts by weight of filler other than colloidal silica, and

(d) from 0.1 to 2.0 parts by weight of alkyltin salt, said emulsion having a pH of 9 or greater.

## Revendications

1. Un procédé pour appliquer une couverture résistant aux intempéries sur une toiture, caractérisé en ce qu'on effectue les étapes suivantes:

(A) on pose un ou des morceau(x) d'étoffe sur la toiture, puis

(B) on lie les morceaux d'étoffe ensemble à leurs joints,

(C) on fait adhérer l'étoffe à la surface de la toiture, au moins à tous les bords et saillies, puis

(D) on revêt l'étoffe avec une composition de silicone élastomère liquide en une quantité suffisante pour que l'étoffe revêtue forme une membrane imperméable à l'eau une fois durcie, la composition étant durcissable dans les conditions atmosphériques.

2. Le procédé de la revendication 1, dans lequel la composition de silicone élastomère liquide est une émulsion aqueuse.

3. Le procédé de la revendication 2, dans lequel l'émulsion aqueuse comprend

(a) 100 parties en poids d'un polydiorganosiloxane bloqué à ses extrémités par des groupes hydroxyle, anioniquement stabilisé, présent sous forme d'une émulsion huile-dans-eau,

(b) de 1 à 150 parties en poids de silice colloïdale,

(c) de 0 à 200 parties en poids de charge autre que la silice colloïdale, et

(d) de 0,1 à 2,0 parties en poids d'un sel d'alkylétain,
cette émulsion ayant un pH de 9 ou plus élevé.

4. Le procédé de la revendication 3, dans lequel le polydiorganosiloxane a un pods moléculaire moyen dans la gamme de 200000 à 700000; la silice colloïdale est présente sous forme d'une dispersion de silice colloïdale stabilisée au sodium à raison de 15 à 50 parties en poids; une charge autre que la silice colloïdale est présente; le sel d'alkyl-étain est un dicarboxylate de diorganoétain; une amine organique composée d'atomes de carbone, d'hydrogène et d'azote, ou d'atomes de carbone, d'hydrogène, d'azote et d'oxygène, est présente aussi, cette amine organique étant soluble dans la quantité d'eau présente dans l'émulsion.

5. Le procédé de la revendication 2, dans lequel l'étoffe est une étoffe de polyester filée et liée, non tissée.

6. Le procédé de la revendication 5, dans lequel on fait se chevaucher les joints d'étoffe; on lie ensemble les joints se chevauchant avec une émulsion de silicone élastomère aqueuse; on réalise l'adhésion à la surface de la toiture avec une composition de silicone élastomère sous forme d'un produit de calfatage; et on revêt l'étoffe avec une émulsion de silicone élastomère aqueuse ayant une teneur en matières solides de 35 à 70 pour cent en poids et une viscosité de 15 Pa·s à 50 Pa·s à 25°C.

7. Le procédé de la revendication 6, dans lequel l'émulsion de silicone élastomère aqueuse comprend

(a) 100 parties en poids d'un polydiorganosiloxane bloqué à ses extrémités par des groupes hydroxyle, anioniquement stabilisé, présent sous forme d'une émulsion huile-dans-eau

(b) de 1 à 150 parties en poids de silice colloïdale,

(c) de 0 à 200 parties en poids de charge autre que la silice colloîdale, et

(d) de 0,1 à 2,0 parties en poids d'un sel d'alkylétain, cette émulsion ayant un pH de 9 ou plus élevé.

## Patentansprüche

1. Verfahren zum Aufbringen einer wasserdichten Plane auf ein Dach, gekennzeichnet durch die Schritte

A) Auflegen eines oder mehrerer Stoffstücke auf das Dach,

B) Verbinden der Stoffstücke an allen Säumen,

C) Befestigen des Stoffes an der Dachoberfläche an mindestens allen Kanten und Vorsprüngen,

D) anschließendes Beschichten des Stoffes mit einer flüssigen, unter atmosphärischen Bedingungen aushärtbaren Siliconelastomer-Zusammensetzung in einer Menge, die ausreichend ist, um das beschichtete Tuch nach dem Härten in eine wasserundurchlässige Membrane zu verwandeln.

2. Verfahren nach Anspruch 1, dadurch gekennzeichnet, daß die flüssige Siliconelastomer-Zusammensetzung eine wässerige Emulsion ist.

3. Verfahren nach Anspruch 2, dadurch gekennzeichnet, daß die wässerige Emulsion enthält

a) 100 Gew. Teile eines anionisch stabilisierten Polydiorganosiloxans mit endständig blockierten Hydroxylgruppen in Form einer Öl-in-Wasser-Emulsion,

b) von 1 bis 150 Gew.Teile colloidales Siliciumdioxid,

c) von 0 bis 200 Gew.Teile Füllstoff, der nicht colloidales Siliciumdioxid ist und

d) von 0,1 bis 2 Gew.Teiles eines Alkylzinnsalzes, wobei die Emulsion einen pH-Wert von 9 oder höher aufweist.

4. Verfahren nach Anspruch 3, dadurch gekennzeichnet, daß das Polydiorganosiloxan ein durchschnittliches Molekulargewicht im Bereich von 200 000 bis 700 000 aufweist, das colloidale Siliciumdioxid in Form einer natriumstabilisierten colloidalen Siliciumdioxid-Dispersion anwesend ist in einer Menge von 15 bis 50 Gew.Teilen, daß ein Füllstoff, der nicht colloidales Siliciumdioxid anwesend ist, daß Alkylzinnsalz ein Diorganozinndicarboxylat ist und außerdem ein organisches Amin, das Kohlenstoff, Wasserstoff und Stickstoffatome oder Kohlenstoffatome, Wasserstoffatome, Stickstoffatome und Sauerstoffatome aufweist, anwesend ist, wobei das organische Amin in der in der Emulsion vorhandenen Menge an Wasser löslich ist.

5. Verfahren nach Anspruch 2, dadurch gekennzeichnet, daß der Stoff ein Faservlies aus verbundenen Polyesterfasern ist.

6. Verfahren nach Anspruch 5, dadurch gekennzeichnet, daß die Stoffsäume sich überlappen und die überlappenden Säume mittels einer wässerigen Siliconelastomer-Emulsion miteinander verbunden sind und mittels einer Siliconelastomer-Zusammensetzung in Form einer Dichtung auf der Dachoberfläche haften und die Beschichtung des Stoffes mit einer wässerigen Siliconelastomer-Emulsion erfolgt, die einen Feststoffgehalt von 35 bis 70 Gew.% und eine Viskosität von 15 Pa s bis 50 Pa s bei 25°C aufweist.

7. Verfahren nach Anspruch 6, dadurch gekennzeichnet, daß die wässerige Siliconelastomer-Emulsion enthält

a) 100 Gew.Tl. eines anionisch stabilisierten Polydiorganosiloxans mit endständig blockierten Hydroxylgruppen in Form einer Öl-in-Wasser-Emulsion,

b) von 1 bis 150 Gew.Tl. colloidales Siliciumdioxid,

c) von 0 bis 200 Gew.Tl. eines Füllstoffes, der nichtcolloidales Siliciumdioxid ist und

d) von 0,1 bis 2 Gew.Tl. Alkylzinnsalz und wobei die Emulsion einen pH-Wert von 9 oder höher aufweist.

0 073 564

FIG. 1

FIG. 2

FIG. 3

1